# EUROPEAN PATENT SPECIFICATION

(11) **EP 1 995 468 B1**
(45) Date of publication and mention of the grant of the patent: **07.05.2014**
(21) Application number: 07738348.7
(22) Date of filing: 13.03.2007
(51) Int. Cl.: F04D 29/34, F01D 5/30, F02K 3/06, F01D 5/32, F04D 29/32

(54) **HOLDING STRUCTURE OF FAN BLADE**
HALTESTRUKTUR EINER VENTILATORSCHAUFEL
STRUCTURE SUPPORT POUR PALE DE VENTILATEUR

(30) Priority: 13.03.2006 JP 2006067623
(43) Date of publication of application: 26.11.2008
(73) Proprietor: IHI Corporation, Tokyo 135-8710 (JP)
(72) Inventor: OKA, Takashi, Koto-ku, Tokyo 1358710 (JP)
(74) Representative: Grünecker, Kinkeldey, Stockmair & Schwanhäusser
(86) International application number: PCT/JP2007/054876
(87) International publication number: WO 2007/105702

(56) References cited:
- DE-A1- 3 236 021
- FR-A1- 2 524 933
- JP-A- 10 110 601
- JP-A- 10 184 308
- JP-A- 10 299 407
- US-A- 3 834 831
- US-A- 5 123 813

## Description

### Technical Field

The present invention relates to a fan blade retaining structure for preventing a fan blade from coming off from a disk even when an axial forward load acts on the fan blade upon breaking the fan blade. A fan blade retaining structure according to the preamble of claim 1 is known from FR 2 524 933 A1.

### Background Art

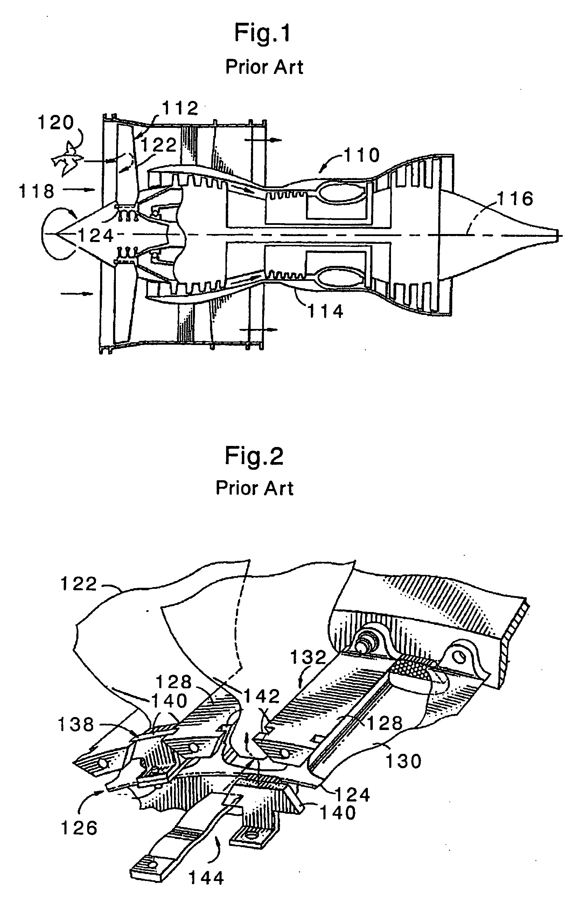

Fig. 1 is a schematic view illustrating a turbofan engine 110 for an airplane. The engine 110 includes a fan assembly 112 which is coaxially disposed with respect to a center shaft 116 and is driven by a core engine 114. During the operation of the engine 110, external air 118 is sucked by the fan assembly 112 so as to produce a thrust for enabling an airplane to fly.

When the airplane having the above-described engine 110 takes off or lands, for example, a comparatively large bird 120 may be sucked into the fan assembly 112. In this case, the bird 120 impacts on fan blades 122 extending outward from a rotor disk 124 in a radial direction, so that a part of the fan blades 122 is broken and scattered. Additionally, alien materials except for the bird may be sucked into the fan assembly to thereby damage components. In addition to the supposition, the fan blades 122 or a part thereof may be broken and scattered due to a large load or the like. Hereinafter, such a phenomenon will be referred to as FBO (Fan Blade Off).

In the event of the FBO, a part of the fan blades 122 may be scattered to collide against the adjacent other fan blades 122, so that an axial forward (upstream) shock power acts on the fan blades 122.

Since the axial forward shock power acting on the fan blades 122 acts in a direction in which the fan blades 122 come off from the rotor disk 124, the fan assembly 112 needs to be provided with a structure capable of retaining the fan blades 122 in the rotor disk 124 even when the axial forward shock power acts on the fan blades 122.

Patent Document 1 has already proposed a fan blade retainer for satisfying the above-described requirements.

Patent Document 1 discloses a retainer assembly 126 for retaining the fan blades 122 in the rotor disk 124. As shown in Fig. 2, the retainer assembly 126 includes the rotor disk 124, a first blade retainer 138, and a second blade retainer 144.

The rotor disk 124 includes a plurality of dovetail posts 128 which are spaced at a predetermined angular interval in a circumferential direction, and a dovetail groove 130 is formed therebetween. Each fan blade 122 includes a dovetail 132 fitted to the dovetail groove 130 in an axial direction, and the dovetail 132 is immovably retained in a radial direction by the dovetail post 128. With the above-described configuration, a centrifugal force produced during rotation of the fan blades 122 is transmitted to the rotor disk 124 via the dovetail post 128.

The first blade retainer 138 is provided so as to prevent the fan blade 122 from moving in an axial forward direction (upstream direction). The first blade retainer 138 includes a fixed plate 140 fixed to the rotor disk 124 so as to immovably retain the fan blade 122 in the dovetail groove 130 in an axial direction. The fixed plate 140 is inserted in an outward radial direction into a pair of grooves 142 formed in the adjacent dovetail posts 128.

The second blade retainer 144 is provided so as to prevent the axial movement of the fan blades 122 by serving as a chock after the fan blades 122 move by a predetermined distance in a case where the axial movement of the fan blades 122 cannot be prevented by the first blade retainer 138. With the above-described configuration, both the first blade retainer 138 and the second blade retainer 144 disperse the axial forward shock energy acting on the fan blades 122 so that each fan blade 122 is retained in the dovetail grooves 130.

[Patent Document 1]

US Patent No. 5,282,720 'Fan blade retainer'

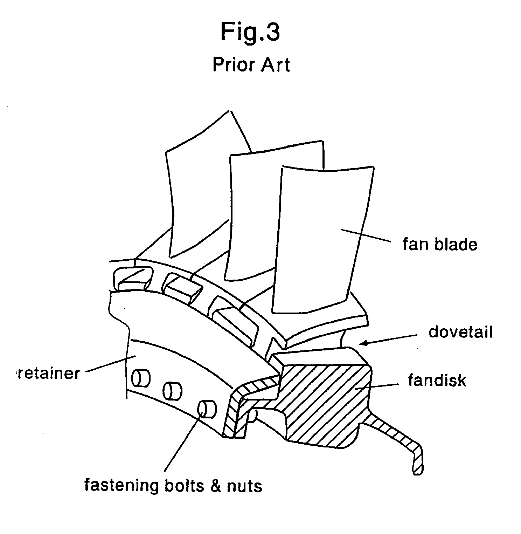

Fig. 3 is a schematic view illustrating a dovetail structure according to a conventional art. As shown in the drawing of Fig. 3, it is necessary to attach the fan blades of the turbofan engine to a peripheral portion of a circular disk (called a fan disk or a spinner) rotationally driven by a turbine. For this reason, in the past, there was adopted a conventional dovetail structure in which a dovetail part is formed in a root portion of the fan blade so as to extend in a longitudinal direction and the dovetail part is fitted to a dovetail groove formed in the periphery of a disk.

In addition, in order to prevent the fan blade from coming off from the dovetail groove due to the axial forward power, in the past, a member called a retainer was fastened to a front portion of the blade by a bolt and a disk.

Examples of the retainer include a circular-ring type for functioning with respect to a plurality of blades and a plate type for functioning with respect to each of the blades.

However, in case of the circular-ring type retainer, since a gap between an action portion of a load and a fastening portion such as a bolt and a nut is long, a problem arises in that the stress acting on the bolt due to the load is difficult to be estimated and the retainer is difficult to be designed. Meanwhile, in case of the plate type retainer, since the retainer is mounted to each fan blade, a problem arises in that operability is poor. For this reason, in both cases of the circular-ring type retainer and the plate type retainer, a problem arises in that a decrease in weight is difficult to be achieved and a cost is high.

In addition, in case of the retainer assembly described in Patent Document 1, although both the first blade retainer 138 and the second blade retainer 144 can disperse the axial forward shock energy acting on the fan blades 122 so that each fan blade 122 is retained in the dovetail groove 130, a problem arises in that the structure is complex and a manufacturing cost is high.

In the retainer assembly, since it is necessary to provide a plurality of first blade retainers 138 and the second blade retainers 144, a problem arises in that the operability during an assembling operation is poor.

### Disclosure of the Invention

### Problems to be Solved by the Invention

The present invention is contrived in consideration of the above-described problems. That is, an object of the invention is to provide a fan blade retaining structure capable of surely preventing a fan blade from coming off from a disk even when an axial forward load acts on the fan blade upon breaking the fan blade, of being easily designed with high estimation precision of stress, and of enabling a fastening bolt to be lighter in weight, smaller in size, and fewer in number than a conventional fastening bolt, thereby reducing the number of components. Accordingly, it is possible to provide the fan blade retaining structure capable of realizing a decrease in weight and cost.

According to the invention, there is provided a fan blade retaining structure in which a plurality of fan blades is configured to be attached to an outer periphery of a disk rotationally driven by a turbine, wherein the disk includes a plurality of dovetail grooves configured to be spaced at a predetermined angular interval in a circumferential direction and to extend in an axial direction, wherein each of the fan blades includes a dovetail part configured to be fitted to each of the dovetail grooves in an axial direction and capable of transmitting a centrifugal force produced during rotation to the disk, and a projecting part configured to be positioned in rear of the dovetail part and to project outward more than the dovetail groove in a circumferential direction, and wherein the projecting part is set to be such a size that the projecting part does not interfere with the dovetail groove when the dovetail part is positioned on the inner side of the dovetail groove in a radial direction.

According to a preferred embodiment of the invention, the fan blade retaining structure further includes an auxiliary retainer configured to be fixed to the disk and to prevent the fan blade from moving in an axial forward direction.

The projecting part is formed by cutting, welding or pressure bonding.

The fan blade retaining structure desirably includes a fan spacer configured to be inserted between a lower surface of the dovetail part and a bottom surface of the dovetail groove so as to position the dovetail part on the outer side in a radial direction.

According to the configuration of the invention, during the rotation of the fan blade, the dovetail part disposed in the dovetail groove is pressed by a centrifugal force to the outer side in a radial direction. Since the fan blade includes the projecting part which is positioned in rear of the dovetail part and projects outward more than the dovetail groove in a circumferential direction, during the rotation, the projecting part serves as a come-off prevention element for restraining a relative displacement of the fan blade and the disk.

Accordingly, even when the axial forward load acts on the fan blade upon breaking the fan blade, it is possible to transmit the axial forward load to the disk in such a manner that the projecting part projecting outward more than the dovetail groove in a circumferential direction comes into contact with a rear surface of the disk.

Since a stress occurring in the projecting part by the axial forward load mainly corresponds to an axial shear stress and a stress occurring in the disk by the axial forward load mainly corresponds to an axial compressive stress, it is possible to accurately estimate an internal stress occurring in the projecting part and the disk.

Since the projecting part and the disk are prevented from being broken by setting the internal stress to a sufficiently small stress, it is possible to surely prevent the fan blade from coming off from the disk.

Since the projecting part is set to be such a size that the projecting part does not interfere with the dovetail groove when the dovetail part is positioned on the inner side of the dovetail groove in a radial direction, the projecting part does not interfere with the disk by positioning the fan blade to be adjacent to the inner side in a radial direction upon stopping the engine, thereby facilitating the assembling operation and the disassembling operation.

Accordingly, it is possible to integrally form the projecting part with the dovetail part, and thus to reduce the number of components.

In addition, when a centrifugal force is large upon using the auxiliary retainer having the same configuration as that of a conventional auxiliary retainer for preventing the fan blade from moving in an axial forward direction, the projecting part comes into contact with the rear surface of the disk so as to transmit the axial forward load to the disk, and thus the axial forward load does not act on the auxiliary retainer in the event of FBO.

Accordingly, the auxiliary retainer may have strength for withstanding the comparatively small axial forward load produced when the dovetail part is positioned on the inner side of the dovetail groove in a radial direction. Thus, since the large axial forward load does not act on the fastener (bolt, nut, and the like) for fastening the auxiliary retainer to the flange part, it is possible to more reduce the weight, the size, and the number of the fastening bolts than a conventional fastening bolt, and thus to reduce the number of components. Accordingly, it is possible to realize a decrease in weight and cost.

In addition, the projecting part of the fan blade is inserted to pass through the dovetail groove from the front side of the disk upon stopping the engine in a state where the fan blade is positioned to be adjacent to the inner side in a radial direction so that the projecting part does not interfere with the disk. Subsequently, the fan spacer is inserted between the lower surface of the dovetail part and the bottom surface of the dovetail groove so that the dovetail part of the fan blade is positioned on the outer side in a radial direction.

Accordingly, it is possible to easily carry out the assembling operation by fixing the fan blade to the operation position upon stopping the engine. Also, it is possible to transmit the axial forward load to the disk by allowing the projecting part to come into contact with the rear surface of the disk even when the centrifugal force is small. Hence, the axial forward load does not acts on the fastener (bolt, nut, and the like) for fastening the auxiliary retainer and the auxiliary retainer, and thus it is possible to more reduce the weight, the size, and the number of the fastening bolt.

### Brief Description of the Drawings

Fig. 1 is a schematic view illustrating a turbofan engine for an airplane.
Fig. 2 is a configuration view illustrating a fan blade retainer disclosed in Patent Document 1.
Fig. 3 is a schematic view illustrating a dovetail structure according to a prior art.
Fig. 4 is a transverse sectional view illustrating a fan part of an engine provided with a fan blade retaining structure according to the invention.
Fig. 5 is a perspective view illustrating a state where a fan blade according to the invention is detached.
Fig. 6A is a view taken along the line A-A shown in Fig. 4 in a state where a fan blade 20 is being mounted.
Fig. 6B is a view taken along the line A-A shown in Fig. 4 in a state where the fan blade 20 is completely mounted.

### Best Mode for Carrying out the Invention

Hereinafter, preferred embodiments of the invention will be described in detail with reference to the accompanying drawings. In addition, in the respective drawings, the same reference numerals are given to the same components and the repetitive description thereof will be omitted.

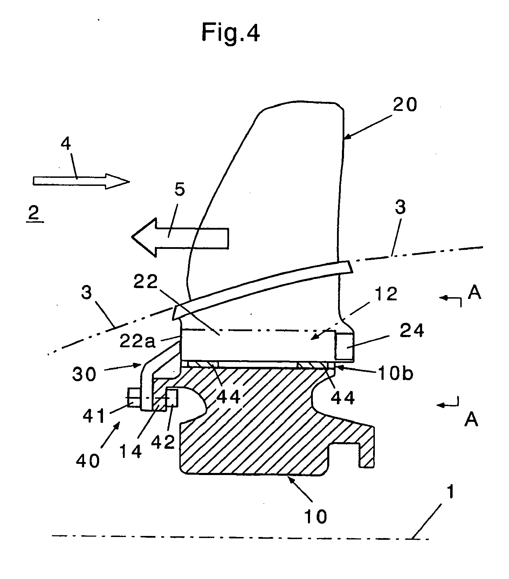

Fig. 4 is a transverse sectional view illustrating a fan part of an engine provided with a fan blade retaining structure according to the invention, in which only the upper side of a shaft center 1 is shown. The fan blade retaining structure according to the invention is configured such that a plurality of fan blades 20 are attached to the outer periphery of a disk 10 which is rotationally driven by a turbine (not shown).

In addition, in the drawing of Fig. 4, Reference numeral 1 denotes the shaft center of the rotary shaft of the disk 10 and the fan blades 20, Reference numeral 2 denotes an air flow passage, Reference numeral 3 denotes the inner peripheral surface of the air flow passage, Reference numeral 4 denotes an intake air flow, and Reference numeral 5 denotes an axial forward power acting on the fan blades 20 in the event of FBO.

As shown in the drawing of Fig. 4, the fan blade retaining structure according to the invention includes the disk 10, the fan blades 20, an auxiliary retainer 30, and a fastener 40.

The disk 10 includes a plurality of dovetail grooves 12 which are spaced at a predetermined angular interval in a circumferential direction and extends in an axial direction. Although it is desirable that the number of the dovetail grooves 12 is the same as that of the fan blades 20, a plurality (two or more) of fan blades 20 may be attached to one dovetail groove 12.

In this example, the dovetail grooves 12 are parallel to a shaft center 1 of a rotary shaft, but may be inclined with respect to the shaft center 1. In addition, each of the dovetail grooves 12 may be formed into a linear shape or a circular arc shape so long as each of the fan blades 20 is inserted and fitted in an axial direction from the front side.

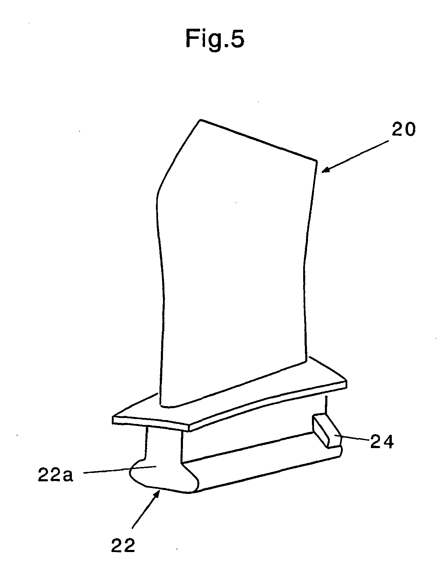

Fig. 5 is a perspective view illustrating a state where the fan blade according to the invention is detached.

In Figs. 4 and 5, the fan blade 20 includes a dovetail part 22 which is formed in the inner end in a radial direction so as to be fitted to the dovetail groove 12. The dovetail part 22 is configured to be fitted to the dovetail groove 12 in an axial direction from the front side and to transmit a centrifugal force acting on the fan blade 20 produced during rotation to the disk 10.

The fan blade 20 further includes a projecting part 24 which is positioned in rear of the dovetail part 22 and projects outward more than the dovetail groove 12 in a circumferential direction.

The projecting part 24 is set to be such a size that the projecting part 24 does not interfere with the dovetail groove 12 when the dovetail part 22 is position on the inner side of the dovetail groove 12 in a radial direction.

In addition, the projecting part 24 may be integrally formed with the dovetail part 22 by cutting or may be integrally formed with the dovetail part 22 by welding or pressure bonding.

In Fig. 4, the auxiliary retainer 30 is fixed to the front edge of the disk 10 by a fastener 40, and the rear edge thereof comes into contact with the front surface of the dovetail part 22 so as to prevent the fan blade 20 from moving in an axial forward direction. The auxiliary retainer 30 may be of a circular-ring type for functioning with respect to a plurality of dovetail parts 22 or a plate type for functioning with respect to each of the dovetail parts 22.

The fastener 40 includes a bolt 41 and a nut 42 which are screw-connected to each other while passing through a through hole formed in the auxiliary retainer 30 and a through hole formed in the flange part 14 of the disk 10.

In Fig. 4, the fan blade retaining structure according to the invention further includes a fan spacer 44. The fan spacer 44 is inserted between a lower surface of the dovetail part 22 and a bottom surface of the dovetail groove 12 so as to position the dovetail part 22 on the outer side in a radial direction.

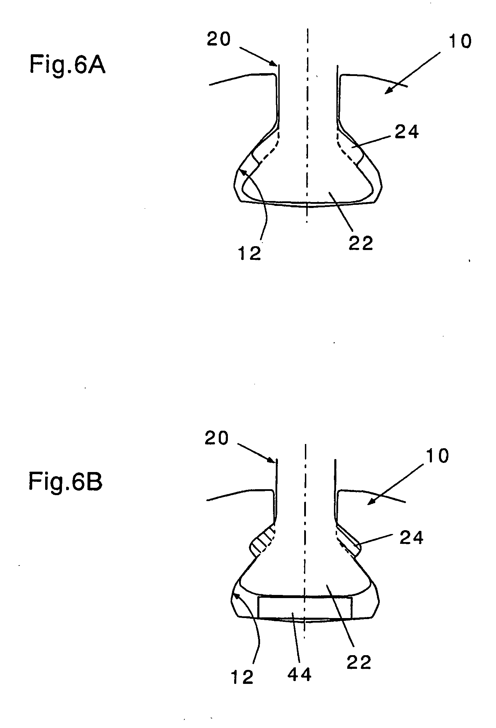

Fig. 6A is a view taken along the line A-A shown in Fig. 4 in a state where the fan blade 20 is being mounted. Fig. 6B is a view taken along the line A-A shown in Fig. 4 in a state where the fan blade 20 is completely mounted.

As described above, as shown in Fig. 6A, the projecting part 24 of the fan blade 20 is set to be such a size that the projecting part 24 does not interfere with the dovetail groove 12 when the dovetail part 22 of the fan blade 20 is positioned on the inner side of the dovetail groove 12 in a radial direction.

Accordingly, the projecting part 24 of the fan blade 20 can be inserted to pass through the dovetail groove 12 from the front side of the disk 10 upon stopping the engine in a state where the fan blade 20 is positioned to be adjacent to the inner side in a radial direction so that the projecting part 24 does not interfere with the disk 10. Subsequently, the fan spacer 44 is inserted between the lower surface of the dovetail part 22 and the bottom surface of the dovetail groove 12 so that the dovetail part 22 of the fan blade 20 is positioned on the outer side in a radial direction as shown in Fig. 6B.

In addition, in this invention, the fan spacer 44 is not an essential component, but the assembling operation can be easily carried out by fixing the fan blade 20 to an operation position upon stopping the engine in terms of the fan spacer.

According to the above-described configuration, during the rotation of the fan blade 20, the dovetail part 22 disposed in the dovetail groove 12 is pressed by a centrifugal force to the outer side in a radial direction. Since the fan blade 20 includes the projecting part 24 which is positioned in rear of the dovetail part 22 and projects outward more than the dovetail groove in a circumferential direction, during the rotation, the projecting part 24 depicted by the slanted lines shown in Fig. 6B serves as a come-off prevention element for restraining a relative displacement of the fan blade 20 and the disk 10.

Accordingly, even when the axial forward load acts on the fan blade 20 upon breaking the fan blade 20, it is possible to transmit the axial forward load to the disk 10 in such a manner that the projecting part 24 projecting outward more than the dovetail groove 12 in a circumferential direction comes into contact with a rear surface 10b of the disk 10.

Since a stress occurring in the projecting part 24 by the axial forward load mainly corresponds to an axial shear stress and a stress occurring in the disk 10 by the axial forward load mainly corresponds to an axial compressive stress, it is possible to accurately estimate an internal stress occurring in the projecting part 24 and the disk 10.

Since the projecting part 24 and the disk 10 are prevented from being broken by setting the internal stress to a sufficiently small stress, it is possible to surely prevent the fan blade 20 from coming off from the disk 10.

Since the projecting part 24 is set to be such a size that the projecting part does not interfere with the dovetail groove 12 when the dovetail part 22 is positioned on the inner side of the dovetail groove 12 in a radial direction, the projecting part 24 does not interfere with the disk 10 by positioning the fan blade 20 to be adjacent to the inner side in a radial direction upon stopping the engine, thereby facilitating the assembling operation and the disassembling operation.

Accordingly, it is possible to integrally form the projecting part 24 with the dovetail part 22, and thus to reduce the number of components.

In addition, when a centrifugal force is large upon using the auxiliary retainer 30 having the same configuration as that of a conventional auxiliary retainer for preventing the fan blade 20 from moving in an axial forward direction, the projecting part 24 comes into contact with the rear surface 10b of the disk 10 so as to transmit the axial forward load to the disk 10, and thus the axial forward load does not act on the auxiliary retainer 30 in the event of FBO.

Accordingly, the auxiliary retainer 30 may have strength for withstanding the comparatively small axial forward load produced when the dovetail part 22 is positioned on the inner side of the dovetail groove 12 in a radial direction. Thus, since the large axial forward load does not act on the fastener (bolt, nut, and the like) for fastening the auxiliary retainer to the flange part, it is possible to more reduce the weight, the size, and the number of the fastening bolt than a conventional fastening bolt, and thus to reduce the number of components. Accordingly, it is possible to realize a decrease in weight and cost.

In addition, it is possible to position the dovetail part 22 of the fan blade 20 to the outer side in a radial direction by inserting the fan spacer 44 between the lower surface of the dovetail part 22 and the bottom surface of the dovetail groove 12.

Accordingly, it is possible to easily carry out the assembling operation by fixing the fan blade to the operation position upon stopping the engine. Also, it is possible to transmit the axial forward load to the disk by allowing the projecting part to come into contact with the rear surface of the disk even when the centrifugal force is small. Hence, the axial forward load does not acts on the fastener (bolt, nut, and the like) for fastening the auxiliary retainer and the auxiliary retainer, and thus it is possible to more reduce the weight, the size, and the number of fastening bolt.

## Claims

1. A fan blade retaining structure in which a plurality of fan blades (20) is configured to be attached to an outer periphery of a disk (10) rotationally driven by a turbine,
wherein the disk (10) includes a plurality of dovetail grooves (12) configured to be spaced at a predetermined angular interval in a circumferential direction and to extend in an axial direction,
wherein each of the fan blades (20) includes a dovetail part (22) configured to be fitted to each of the dovetail grooves (12) in an axial direction and capable of transmitting a centrifugal force produced during rotation to the disk (10), and a projecting part (24) configured to be positioned in rear of the dovetail part (22), and
**characterized in that**
the projecting part (24) is configured to project outward more than the dovetail groove (12) in a circumferential direction, and is set to be such a size that the projecting part (24) does not interfere with the dovetail groove (12) when the dovetail part (22) is positioned on the inner side of the dovetail groove (12) in a radial direction.

2. The fan blade retaining structure according to Claim 1, further comprising:
an auxiliary retainer (30) configured to be fixed to the disk (10) and to prevent the fan blade (20) from moving in an axial forward direction.

3. The fan blade retaining structure according to Claim 1, wherein the projecting part (24) is formed by cutting, welding or pressure bonding.

4. The fan blade retaining structure according to Claim 1, further comprising:
a fan spacer (44) configured to be inserted between a lower surface of the dovetail part (22) and a bottom surface of the dovetail groove (12) so as to position the dovetail part (22) on the outer side in a radial direction.

## Patentansprüche

1. Gebläseflügel-Haltestruktur, bei der eine Vielzahl von Gebläseflügeln (20) so eingerichtet sind, dass sie an einem Außenumfang einer Scheibe (10) angebracht sind, die von einer Turbine rotierend angetrieben wird,
wobei die Scheibe (10) eine Vielzahl von Schwalbenschwanznuten (12) enthält, die so eingerichtet sind, dass sie in einem vorgegebenen Winkelintervall in einer Umfangsrichtung beabstandet sind und sich in einer axialen Richtung erstrecken,
wobei jeder der Gebläseflügel (20) einen Schwalbenschanzteil (22), der so eingerichtet ist, dass er in einer axialen Richtung in jede der Schwalbenschwanznuten (12) eingesetzt ist und in der Lage ist, eine bei Drehung der Scheibe (10) erzeugte Zentrifugalkraft zu übertragen, und einen vorstehenden Teil (24) enthält, der so eingerichtet ist, dass er hinter dem Schwalbenschanzteil (22) positioniert ist, und
**dadurch gekennzeichnet, dass**
der vorstehende Teil (24) so eingerichtet ist, dass er in einer Umfangsrichtung weiter nach außen vorsteht als die Schwalbenschwanznut (12), und auf eine Größe festgelegt ist, durch die der vorstehende Teil (24) nicht in behindernden Kontakt mit der Schwalbenschwanznut (12) kommt, wenn der Schwalbenschwanzteil (22) in einer radialen Richtung an der Innenseite der Schwalbenschwanznut (12) positioniert ist.

2. Gebläseflügel-Haltestruktur nach Anspruch 1, die des Weiteren umfasst:
einen Hilfs-Halter (30), der so eingerichtet ist, dass er an der Scheibe (10) befestigt ist und verhindert, dass sich der Gebläseflügel (20) in einer axialen Richtung nach vorn bewegt.

3. Gebläseflügel-Haltestruktur nach Anspruch 1, wobei der vorstehende Teil (24) mittels Schneiden, Schweißen oder Druckverkleben ausgebildet wird.

4. Gebläseflügel-Haltestruktur nach Anspruch 1, die des Weiteren umfasst:
einen Gebläse-Abstandshalter (44), der so eingerichtet ist, dass er zwischen eine untere Fläche des Schwalbenschwanzteils (22) und eine Bodenfläche der Schwalbenschwanznut (12) so eingeführt ist, dass der Schwalbenschwanzteil (22) in einer radialen Richtung an der Außenseite positioniert ist.

## Revendications

1. Structure de maintien de pale de soufflante dans laquelle une pluralité de pales de soufflante (20) est configurée pour être fixée à la périphérie extérieure d'un disque (10) entrainé en rotation par une turbine,
- dans laquelle le disque (10) comprend une pluralité de rainures en queue d'aronde (12) configurées pour être espacées à un intervalle angulaire prédéterminé dans une direction circonférentielle et pour s'étendre dans une direction axiale,
- dans laquelle chacune des pales de soufflante (20) comprend une partie en queue d'aronde (22) configurée pour être adaptée à chacune des rainures en queue d'aronde (12) dans une direction axiale et capable de transmettre une force centrifuge produite durant une rotation du disque (10) et une partie en saillie (24) configurée pour être positionnée en arrière de la partie en queue d'aronde (22) et
- **caractérisée en ce que** :
- la partie en saillie (24) est configurée pour se projeter vers l'extérieur davantage que la rainure en queue d'aronde (12) dans une direction circonférentielle et est prévue pour être d'une taille telle que la partie en saillie (24) n'interfère pas avec la rainure en queue d'aronde (12) lorsque la partie en queue d'aronde (22) est positionnée sur le côté intérieur de la rainure en queue d'aronde (12) dans une direction radiale.

2. Structure de maintien de pale de soufflante selon la revendication 1, comprenant en outre :
- un dispositif auxiliaire de maintien (30) configuré pour être fixé au disque (10) et pour empêcher la pale de soufflante (20) de se déplacer dans une direction axiale vers l'avant.

3. Structure de maintien de pale de soufflante selon la revendication 1, dans laquelle la partie en saillie (24) est formée par découpe, soudage ou assemblage par pression.

4. Structure de maintien de pale de soufflante selon la revendication 1, comprenant en outre :
- un dispositif d'espacement de pale (44) configuré pour être inséré entre une surface inférieure de la partie en queue d'aronde (22) et une surface de fond de la rainure en queue d'aronde (12) de façon à positionner la partie en queue d'aronde (22) sur le côté extérieur dans une direction radiale.
